# EUROPEAN PATENT APPLICATION

(11) **EP 1 075 101 A2**
(43) Date of publication of application: **07.02.2001**
(21) Application number: 00401944.4
(22) Date of filing: 06.07.2000
(51) Int. Cl.: H04J 3/06, H04B 7/26

(54) **Method and system for synchronising frames**

(30) Priority: 05.08.1999 ES 9901796
(71) Applicant: ALCATEL, 75008 Paris (FR)
(72) Inventor: Fernandez Duran, Alfonso, 28229 Villanueva del Pardillo, Madrid (ES); Casajus Quiros, Javier, 28033 Madrid (ES); Fernandez Herrero, Angel, 28035 Madrid (ES); Fernandez-Cid Enriquez, Pablo, 28003 Madrid (ES)
(74) Representative: Lamoureux, Bernard

(57) **Abstract**

Method for synchronising frames transmitted between a radio interface connected to a vocoder of a remote unit and a radio interface connected to a vocoder of a fixed unit in a radio communications system. The vocoder employs as alignment signal for decoding the frames received from its radio interface the fixing of the position of the parity bit within a sample taken from the signal received over the radio interface.

From this position, the position of the first bit of the voice frame can be deduced, since the frame structure, i.e. the distribution of the bits within the frame, is known beforehand.

## Description

### OBJECT OF THE INVENTION

The present invention relates to a method and system for achieving synchronisation of frames transmitted over a radio interface connected to a voice encoder/decoder, or vocoder, from a remote unit, fixed and/or mobile, to a radio interface connected to a voice encoder/decoder of a fixed unit of a radiocommunications system that implements duplex communications.

### STATE OF THE ART

A radiocommunications system that implements duplex communications comprises one or more fixed units connected to a transport network such as a public switched telephone network PSTN. Likewise, each of these units is connected by radio to a group of remote units, fixed and/or mobile, located within the coverage area associated with each fixed unit.

In the uplink direction of the transmission, when a user connected to a remote unit wishes to set up a communication, once the communication link has been established, he sends a signal bearing information, such as a voice signal, which is converted into a digital signal by means of pulse code modulation (PCM) techniques in a voice encoder/decoder, or vocoder.

The vocoder sends a digital signal to the radio interface of the remote unit for it to be transmitted to the fixed unit. The latter receives it through its radio interface which forwards it to a vocoder, similar to that already mentioned, for it to be decoded. Inversely, in the downlink direction of the transmission, the processes are carried out in reverse, whereby the destination subscriber receives, for example, a signal via a loudspeaker of a telephone set.

Since there is a transmission and reception process of a radio signal, which transports voice frames, between the respective fixed and remote unit vocoders, it is necessary for these to be synchronised. A vocoder synchronisation process is described in the USA patent number 5. 586.119, entitled "METHOD AND APPARATUS FOR PACKET ALIGNMENT IN A COMMUNICATION SYSTEM", and incorporated in the present patent application by reference.

To carry out the alignment process it is necessary to insert a synchronisation parameter in the voice frame that is transmitted. Once the synchronisation parameter has been detected, the decoding process can start in the vocoder pertaining to the receiving unit.

This process suffers from a disadvantage which arises from the adding of signalling to the transmitted radio signal for performing the synchronisation of the vocoders that reduces the overall transport capacity of the radiocommunications system, i.e., it diminishes the bandwidth, and also, it has a negative impact on the quality of the signal recovered by the vocoder. A further drawback lies in the structure of the transmitted voice frame not being in accordance with standards such as Recommendation G.729 of the ITU-T.

### CHARACTERISATION OF THE INVENTION

To overcome the problems mentioned above, a method is proposed for alignment of frames transmitted between a radio interface connected to a voice encoder/decoder, or vocoder, of a remote unit, fixed and/or mobile, and a radio interface connected to a vocoder of a fixed unit of a radiocommunications system that sets up duplex communications.

The fixed unit is connected by cable to a public or private telephone network for the purpose of transmitting and receiving the traffic generated and intended for a destination subscriber connected to a remote unit.

The recovery of alignment of the frames received over a radio interface belonging to a receiving unit, such as the fixed and/or the remote unit, at a given moment of a communication, is achieved by acquiring a sample of duration equivalent to a predetermined number of frames of the received signal, followed by a parity detecting scanning process amongst a predetermined number of protected bits and a parity bit within the sample.

Next, the position of the first bit of a frame held within the received signal is determined based on the position of the previously identified first parity bit and on prior knowledge of the distribution of the bits inside the transmitted frame.

In brief, the vocoder employs as alignment signal for decoding the frames received from the radio interface the fixing of the parity bit position within a sample extracted from the signal received over the radio interface. Thus, once the position of the parity bit is established the position of the first bit in the frame can be deduced since the frame structure, i.e., the distribution of bits within the frame is known beforehand.

The frame alignment method of the invention maintains the frame structure defined by standards such as Recommendation G.729, and does not diminish the transport capacity of the radiocommunications system since it does not add any signal for achieving frame synchronisation. Consequently, it does not impair the vocoder quality.

### BRIEF DESCRIPTION OF THE FIGURES

A more detailed explanation of the invention is given in the following description, based on the attached figures, in which:
- figure 1 shows a block diagram of a radiocommunications system connected to a public switched telephone network according to the invention,
- figure 2 is a diagrammatic representation of a sample taken from a signal received over a radio interface according to the invention,
- figure 3 shows a block diagram of a remote unit, according to the invention, and
- figure 4 shows a block diagram of a fixed unit according to the invention.

### DESCRIPTION OF THE INVENTION

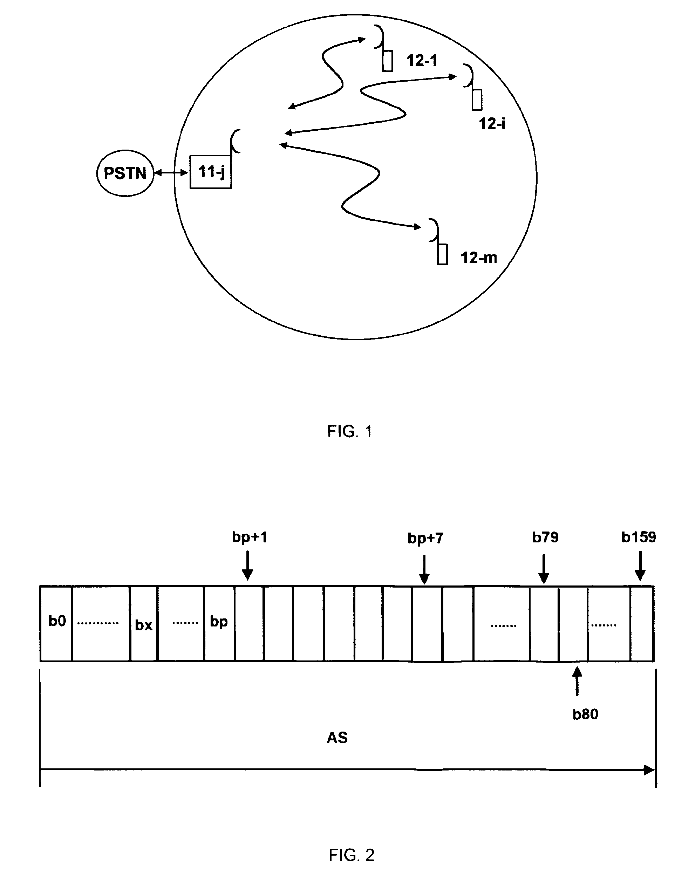

Figure 1 shows a radiocommunications system which provides duplex communications between a set of fixed units 11-1 to 11-n and a set of fixed and/or mobile remote units 12-1 to 12-m. Normally, the fixed units 11-1 to 11-n are connected to a telephone transport network such as a public switched telephone network PSTN.

A fixed unit 11-j (where j = 1, ..., n) is capable of maintaining and setting up, simultaneously, various radio communications with a plurality of remote units 12-1 to 12-m located within its coverage area. Therefore, a remote unit 12-i (where i = 1, ..., m) sets up and receives telephone calls via the fixed unit 11-j.

Thus, when a subscriber sets up a communication from a telephone set, an analogue voice signal, for example, is produced that is converted into a digital signal by means of pulse code modulation (PCM) techniques, said encoding being performed in a voice encoder/decoder (voice codec), hereinafter referred to as a vocoder.

The vocoder divides the voice signal into successive frames of predetermined duration being the basic frame structure already defined, so that each frame contains a predetermined number of bits that are distributed within the frame according to a predetermined criterion.

Thus, an 8 kbps vocoder which complies with Recommendation G.729, generates 10 ms frames, each of which contains 80 bits. Similarly, the distribution of the 80 bits within the frame is also defined, such that there is an 8 bit segment that includes a certain protection with redundancy, that is, by means of parity control. Both the position of this segment and the position of the parity bit are known beforehand.

An 8 kbps vocoder has been taken as an example in this description of the invention, without this signifying any restriction in the scope of the invention. It is also applicable to data.

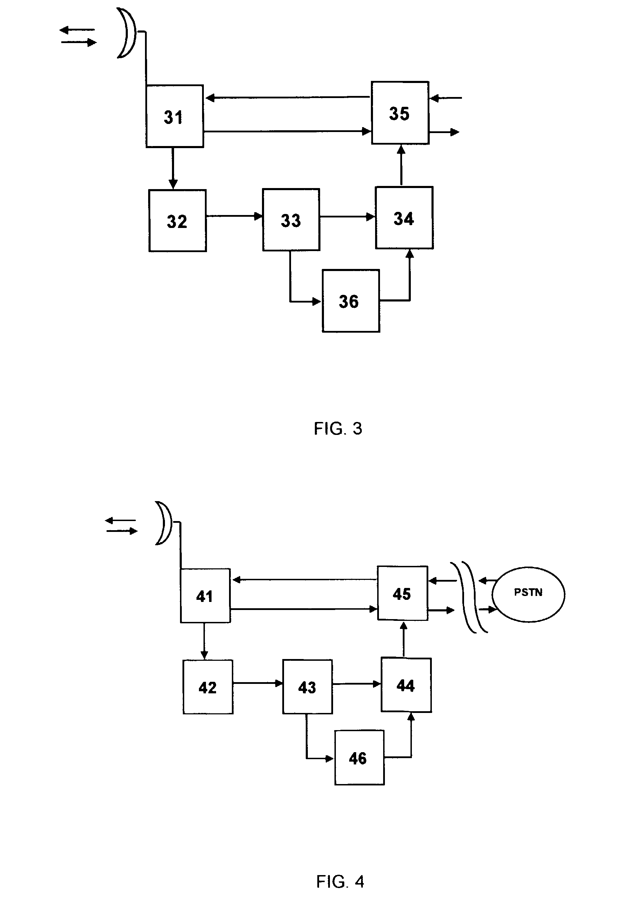

The setting up and maintaining of a radio communication for sending and receiving successive frames implies that vocoders 35 and 45 belonging, respectively, to remote unit 12-i and to fixed unit 11-j, as shown in figures 3 and 4, must be synchronised.

When a subscriber has set up a communication, this implies that there is allocated an radio channel (time slot) into which are inserted the signals relative to the communication established, i.e., the successive frames are transmitted in the allocated time slot between the radio interfaces 31 and 41 belonging, respectively, to remote unit 12-i and to fixed unit 11-j.

The method of the invention proposes an alignment procedure for frames transmitted between vocoders 35, 45. Consequently, the vocoder belonging to the unit receiving a radio signal is capable of decoding the frames.

With relation to figure 2, the first step in the process is to take a sufficiently long sample, equivalent to the duration of a predetermined number of frames, for example two frames in which the bits are numbered from b0 to b159, from a signal received, at a given time, over radio interface 31, 41 belonging, respectively, to remote unit 12-i and to fixed unit 11-j.

Next, a block is formed with a predetermined number of bits bp to bp+7 (where p = 0, ..., 152) of the sample, for the purpose of calculating the parity value and, thereafter, checking the coincidence of the calculated value with the value of the transmitted parity bit. If the values coincide, it means a valid frame alignment signal has been detected.

Once known the position of the segment with bits bp to bp+7, which comes protected by means of a parity bit inside the sample, and, consequently, the parity bit position, it is deduced the position of the first bit bx (where x = 0, ..., 159) of a frame within the data stream of the received signal, since the distribution (position) of the bits within the frame is already known.

In brief, a valid signal for alignment of the received frame is considered to be the detecting and fixing of the parity bit, given that a segment of bits bp to bp+7 of the frame contains protection with redundancy through parity control. Once frame alignment has been achieved, the vocoder performs the decoding of the received signal.

Since, due to the statistical nature of the data contained in the frame, the combination of bits plus redundancy can occur in arbitrary, uncontrolled positions, and in order to provide protection against false frame alignment, a register of coincidences is formed in which the coincidences are recorded in sequence for each position within the sample lasting two frames, bits b0 to b159, whereby the position with the greatest number of coincidences indicates the reference position for fixing the first bit bx of the frame.

If no coincidence is encountered between the value calculated for the parity bit and that transmitted, the process previously described is repeated until a group of bits bp to bp+7 is found whose combination corresponds with the parity bit.

Thus, the previous block is shifted one position within the b0 to b159 sample. That is, if the previous block were formed by bits b1 to b8 of the sample, for example, the block containing the bits b2 to b9 is then taken, and so on in succession. The scanning process is performed in the ascending direction AS of the sample with duration equivalent to two frames, for example.

During normal operation of the transmission, in both directions, between remote unit 12-i and fixed unit 11-j, when a communication is established, the process described above is monitored periodically in order to check whether frame alignment has been lost. The frame alignment recovery procedure must start immediately after loss of frame alignment has been confirmed.

In the eventuality that a loss in alignment between vocoders 35, 45 occurs due to an integrity failure in the transmission system, the time required to recover alignment again is variable and shall depend on the seriousness of the integrity failure on the frame data.

When a subscriber wishes to set up a communication, this situation requires full synchronisation, i.e., the process described above is repeated in a predetermined number of frames (minimum number of frames), for example 20 frames (0.2 s in duration), said situation being communicated by the transmission system to vocoders 35, 45. That is, there is a requirement for a minimum number of coincidences between the parity bit calculated by the respective vocoder 35, 45 and the parity bit transmitted to determine with precision the position of the first bit bx of the frame.

A severe loss of synchronisation in the transmission system, for example a radio channel disruption, is similar to the situation described above. Consequently, it shall be treated in a like manner by the system.

With respect now to figure 3, remote unit 12-i comprises the radio interface 31 for receiving and transmitting radio signals to the fixed unit 11-j. The radio interface 31 is connected to the vocoder 35 that carries out the encoding/decoding of signals received from and intended for the subscriber, respectively. Moreover, the radio interface 31 is connected to selector means 32 that carry out the acquisition of a sample from the received radio signal, and its output is connected to calculator means 33 that take the group of bits bp to bp+7, calculate the parity and make the comparison of the calculated value with the parity bit value. Once a group of bits bp to bp+7 has been detected in which coincidence occurs with the parity bit, fixing means 34, whose input is connected to an output of the calculator means 33, determine the position of the first bit bx of the frame.

When the calculator means 33 detect a coincidence, they communicate this to a coincidence storage register 36, so that when the register reaches the minimum number of coincidences required for determining the position of the first bit bx of the frame, it communicates this to the fixing means 34.

With respect to figure 4, fixed unit 11-j comprises the radio interface 41 for receiving and transmitting radio signals to the remote unit 12-i. In like manner, radio interface 41 is connected to vocoder 45 that carries out the encoding/decoding of signals received from and intended for the telephone network PSTN, respectively.

The radio interface 41 is connected to selector means 42 that carry out the acquisition of a sample from the received radio signal, and its output is connected to calculator means 43 that take the group of bits bp to bp+7, calculate the parity and make the comparison of the calculated value with the parity bit value. Once a group of bits bp to bp+7 has been detected in which coincidence occurs with the parity bit, fixing means 44 whose input is connected to an output of the calculator means 43, determine the position of the first bit bx of the frame.

When the calculator means 43 detect a coincidence, they communicate this to a coincidence storage register 46, so that when the register reaches the minimum number of coincidences required for determining the position of the first bit bx of the frame, it communicates this to the fixing means 44.

## Claims

1. **Method for synchronising frames** transmitted between a radio interface (31) connected to a voice encoder/decoder (35) of a remote unit (12-i), and a radio interface (41) connected to a voice encoder/decoder (45) of a fixed unit (11-j) of a radiocommunications system; **characterised** in that it comprises the stage of acquisition of a sample of duration equivalent to a predetermined number of frames of a received signal, followed by scanning for the occurrence of parity among a predetermined number of protected bits (bp to bp+7) and a parity bit within said sample, and then by the fixing of the first bit (bx) of a frame of said received signal based on the position of said parity bit identified in the previous stage and on the knowledge of the structure of said frame.

2. **Method for synchronising frames** according to claim 1, **characterised** in that it also comprises the stage of storage of a predetermined number of parity detections within said sample.

3. - **Method for synchronising frames** according to claim 2, **characterised** in that the scanning for the occurrence of parity among a predetermined number of bits (bp to bp+7) of said sample is repeated until parity is detected, so that each repetition involves the shifting of said predetermined number of bits (bp to bp+7) one position inside said sample.

4. **System for synchronising frames** transmitted between a radio interface (31) connected to a voice encoder/decoder (35) of a remote unit (12-i), and a radio interface (41) connected to a voice encoder/decoder (45) of a fixed unit (11-j) of a radiocommunications system; **characterised** in that said radio interface (31) is connected to selector means (32) adapted for acquiring a sample of duration equivalent to a predetermined number of frames of a received signal, its output being connected to calculator means (33) adapted for scanning for the occurrence of parity among a predetermined number of protected bits (bp to bp+7) and a parity bit within said sample, one of its outputs being connected to fixing means (34) adapted for determining the position of the first bit (bx) of a frame of said received signal based on the position of said parity bit and on the knowledge of the structure of said frame.

5. **System for synchronising frames** according to claim 4, **characterised** in that said remote unit (12-i) also comprises a coincidence storage register (36) adapted for storing at least a predetermined number of parity detections within said sample, its input being connected to another output of said calculator means (33) and its output being connected to the input of said fixing means (34).

6. **System for synchronising frames** according to claim 4; **characterised** in that said radio interface (41) is connected to selector means (42) adapted for acquiring a sample of duration equivalent to a predetermined number of frames of a received signal, its output being connected to calculator means (43) adapted for scanning for the occurrence of parity among a predetermined number of protected bits (bp to bp+7) and a parity bit within said sample, one of its outputs being connected to fixing means (44) adapted for determining the position of the first bit (bx) of a frame of said received signal based on the position of said parity bit and on the knowledge of the structure of said frame.

7. **System for synchronising frames** according to claim 6, characterised in that said fixed unit (11-j) also comprises a coincidence storage register (46) adapted for storing at least a predetermined number of parity detections within said sample, its input being connected to another output of said calculator means (43) and its output being connected to the input of said fixing means (44).
